# EUROPÄISCHE PATENTSCHRIFT

(11) **EP 3 682 296 B1**
(45) Veröffentlichungstag und Bekanntmachung des Hinweises auf die Patenterteilung: **10.11.2021**
(21) Anmeldenummer: 18773069.2
(22) Anmeldetag: 14.09.2018
(51) Int. Cl.: G03B 17/00, G03B 19/00, B60R 1/00, H04N 5/00

(54) **FERNSTEUERUNG FÜR KAMERAS**
REMOTE CONTROL FOR CAMERAS
TÉLÉCOMMANDE POUR CAMERAS

(30) Priorität: 14.09.2017 AT 507692017
(43) Veröffentlichungstag der Anmeldung: 22.07.2020
(73) Patentinhaber: Cmotion GmbH, 1050 Wien (AT)
(72) Erfinder: TSCHIDA, Christian, 1040 Wien (AT)
(74) Vertreter: Röggla, Harald
(86) Internationale Anmeldenummer: PCT/AT2018/060211
(87) Internationale Veröffentlichungsnummer: WO 2019/051523

(56) Entgegenhaltungen:
- EP-A1- 0 574 105
- US-A- 6 161 933
- US-A1- 2003 025 802

## Beschreibung

Die Erfindung betrifft eine Fernsteuerung für Kameras, aufweisend eine, von einem Benutzer entlang einer Griffachse in eine erste Hand aufnehmbare Handgriffeinheit und ein, mit einer zweiten Hand des Benutzers bedienbares und um eine erste Drehachse drehbares erstes Bedienelement, wobei die erste Drehachse im Wesentlichen normal auf eine Hauptachse der Fernsteuerung steht und mit der Hauptachse eine Hauptebene aufspannt.

Im Filmgeschäft sind gewisse Aufnahmesituationen mit einer Kamera, insbesondere einer professionellen Filmkamera, ohne Fernsteuerung für die Kamera nicht beherrschbar. Dies ist zum Beispiel der Fall, wenn die Kamera an einem Fahrzeug oder an einem mechanischen Auslegearm mit Gegengewicht, einem sogenannten "Jib-Arm", befestigt ist, oder in Aufnahmesituationen, die besonders schnelle Anpassungen auf sich ändernde Bedingungen erfordern, beispielsweise bei Action- oder Dokumentationsaufnahmen. Wichtig ist bei derartigen Fernsteuerungen vor allem, dass sie kompakt, und handlich sind und dass sie trotz ihrer Kompaktheit ausreichend Anzeige- und Bedienmöglichkeiten aufweisen, die schnell und intuitiv abzulesen und/ oder zu bedienen sind.

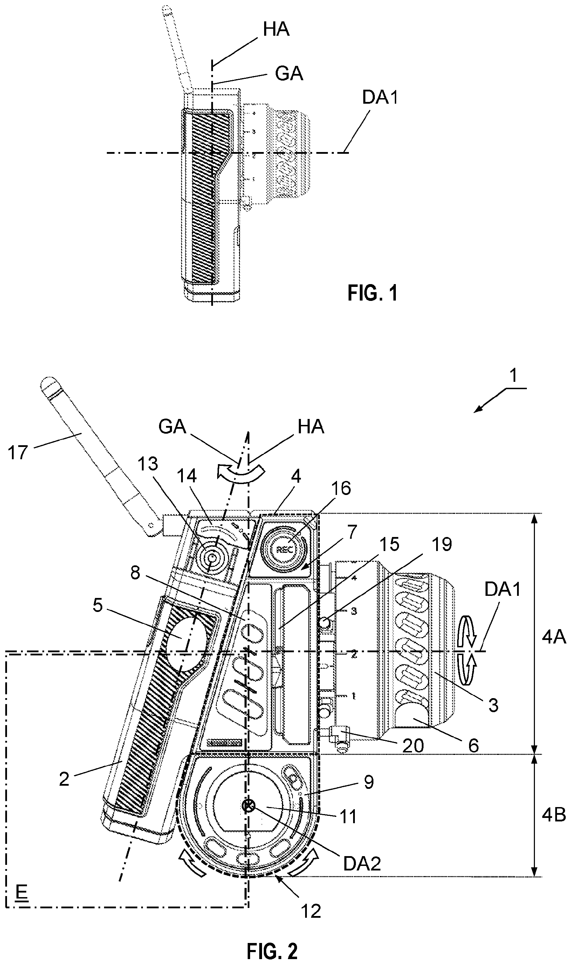

Aus dem Stand der Technik ist eine Fernsteuerung für Kameras gemäß Figur 1 bekannt. Die Fernsteuerung kann von einem Benutzer an einer Handgriffeinheit, die sich in Figur 1 links befindet, mit einer Hand gehalten und mit einer zweiten Hand an einem Bedienelement, das sich in Figur 1 rechts befindet, bedient werden. Durch Drehen des Bedienelements können so beispielsweise die Skalen (Fokus, Iris, Zoom) eines Objektivs einer Kamera gesteuert werden. Diese bekannte Fernsteuerung weist den Nachteil auf, dass die Anzahl der vorhandenen, intuitiv zu bedienenden Bedienelemente unzureichend und nicht ergonomisch angeordnet sind ist. Zusätzliche Bedienelemente eines Aufsteckmoduls können beispielsweise an einem distalen vorderen Bereich der Handgriffeinheit aufgesteckt werden, jedoch sind diese Bedienelemente dann schlecht erreichbar, der Kontakt zwischen der Handgriffeinheit und dem Aufsteckmodul fehleranfällig und Verschleiß unterworfen und die Fernsteuerung insgesamt weniger kompakt und handlich. Außerdem ist bei manchen der bekannten Fernsteuerung nachteilig, dass sich ein Display zur Informationsanzeige auf einer Seitenfläche der Handgriffeinheit befindet, wodurch ein Benutzer die Handgriffeinheit bei jedem Ablesevorgang drehen muss, da in einem Betriebszustand üblicherweise nur die Oberseite der Handgriffeinheit in einem direkten Blickfeld des Benutzers liegt. US 2003/025802 A1 und US 6 161 933 A zeigen Fernbedienungen für Kameras welche mit einer Hand bedient werden können.

Es ist eine Aufgabe der vorliegenden Erfindung, die Nachteile der bekannten Fernsteuerungen für Kameras zumindest zu vermindern.

Die vorliegende Erfindung löst diese Aufgabe dadurch, dass die Griffachse in der Hauptebene aus der Hauptachse herausgedreht ist, wodurch ein Winkel zwischen Griffachse und der ersten Drehachse größer als 90 Winkelgrad ist, wobei die Fernsteuerung in dem, durch das Herausrehen der Griffachse vorliegenden Bereich einen Bedienkörper mit zusätzlichen Anzeigemitteln und/ oder Bedienelementen aufweist.

Durch die neuartige Ausgestaltung und die entsprechend neuartige technische Konstruktion der erfindungsgemäßen Fernsteuerung wird der Bereich der Oberfläche der Fernsteuerung, in dem zusätzliche Anzeigemittel und/ oder Bedienelemente, die von dem Benutzer schnell und intuitiv abzulesen und/ oder zu bedienen sind, eingebracht werden können, vorteilhaft erhöht. Hierbei büßt die Fernsteuerung weder über Gebühr an Kompaktheit und Handlichkeit ein, noch weist sie fehleranfällige Kontakte auf. Außerdem wird vorteilhaft die Ergonomie der erfindungsgemäßen Fernsteuerung verbessert, da der stumpfe Winkel, also ein Winkel größer als 90 Winkelgrad, zwischen Griffachse und erster Drehachse eine natürlichere Haltung des Benutzers ermöglicht, wenn er die Fernsteuerung in der dafür vorgesehenen Betriebslage hält und/ oder bedient.

In einer zweckmäßigen Ausgestaltung weist der Bedienkörper einen ersten Abschnitt und einen zweiten Abschnitt auf, wobei sich in Betriebslage der Fernsteuerung der erste Abschnitt distal und der zweite Abschnitt proximal zum Benutzer befinden. Hierdurch kann der Bedienkörper hinsichtlich einer möglichst intuitiven und schnellen Bedienbarkeit optimiert werden.

In einer vorteilhaften Ausgestaltung weist der erste Abschnitt des Bedienkörpers einen, parallel zur Hauptebene trapezförmigen Querschnitt und der zweite Abschnitt des Bedienkörpers einen, parallel zur Hauptebene zumindest teilweise halbkreisförmigen Querschnitt auf. Die Oberfläche des Bedienkörpers wird so, unter Beibehaltung einer möglichst guten Kompaktheit, hinsichtlich der Erreichbarkeit und der intuitiven Bedienbarkeit der Bedienelemente optimiert.

Zweckmäßig weist der erste Abschnitt des Bedienkörpers auf einer Oberseite ein zweites Bedienelement auf, vorzugsweise mit mechanischen und/ oder elektronischen Druckelementen für einen Daumen der ersten Hand des Benutzers. Das zweite Bedienelement ist so besonders schnell und intuitiv bedienbar.

Besonders zweckmäßig weist der zweite Abschnitt des Bedienkörpers auf der Oberseite ein drittes Bedienelement auf, vorzugsweise mit mechanischen und/ oder elektronischen Druckelementen für einen Daumen der zweiten Hand des Benutzers. Das dritte Bedienelement ist so besonders schnell und intuitiv bedienbar.

In einer vorteilhaften Ausgestaltung weist der zweite Abschnitt des Bedienkörpers ein rundes Display auf. Die verfügbare Oberfläche des Bedienkörpers wird so gut ausgenutzt und das Display ist schnell und intuitiv ablesbar und/ oder bedienbar.

In einer besonders vorteilhaften Ausgestaltung ist das dritte Bedienelement zumindest abschnittsweise entlang des Umfangs des Displays angeordnet. Die verfügbare Oberfläche des Bedienkörpers wird so besonders gut ausgenutzt.

In einer vorteilhaften Ausgestaltung weist der zweite Abschnitt des Bedienkörpers entlang seiner halbkreisförmigen Umfangsfläche ein um eine zweite Drehachse drehbares viertes Bedienelement auf, vorzugsweise für die Bedienung durch den Daumen der zweiten Hand des Benutzers, wobei die zweite Drehachse im Wesentlichen normal auf die Hauptebene steht. Die Anzahl der zusätzlichen Bedienelemente, die von dem Benutzer schnell und intuitiv zu bedienen sind, wird so, unter Beibehaltung der Kompaktheit und der Handlichkeit der erfindungsgemäßen Fernsteuerung, weiter erhöht.

In einer weiteren vorteilhaften Ausgestaltung weist die Handgriffeinheit in einem oberen distalen Bereich ein fünftes Bedienelement auf, insbesondere einen Joystick für die Bedienung durch den Daumen der ersten Hand des Benutzers. Die Anzahl der zusätzlichen Bedienelemente, die von dem Benutzer schnell und intuitiv zu bedienen sind, wird so, unter Beibehaltung der Kompaktheit und der Handlichkeit der erfindungsgemäßen Fernsteuerung, weiter erhöht.

In einer weiteren vorteilhaften Ausgestaltung ist das erste Bedienelement als Drehknopf mit einer aktivierbaren und de-aktivierbaren Drehwinkelbegrenzung ausgebildet. In einem ersten Bedienmodus, in dem die Drehwinkelbegrenzung aktiviert ist, kann der Drehknopf in beide Umdrehungsrichtungen um einen bestimmen Winkel kleiner als 360 Winkelgrad gedreht werden. In einem zweiten Bedienmodus, in dem die Drehwinkelbegrenzung deaktiviert ist, kann der Drehknopf in beide Umdrehungsrichtungen beliebig lange um einen Winkel, der auch größer als 360 Winkelgrad sein kann, gedreht werden.

Zweckmäßig weist die Fernsteuerung zur Energieversorgung eine Batterie und einen Kondensator auf, wobei der Kondensator dazu ausgebildet ist für eine bestimmte Zeitdauer, insbesondere während des Austauschs der Batterie, eine ausreichende Energieversorgung der Fernsteuerung zu gewährleisten. Hierdurch kann vorteilhaft eine leere Batterie gewechselt werden ohne, dass die Fernsteuerung abgeschaltet werden muss und/ oder die Energieversorgung ungewollt unterbrochen wird.

Die Erfindung betrifft außerdem ein System zur Fernsteuerung einer Funktion oder eines Elements, insbesondere eines Objektivs, einer Filmkamera des Systems, wobei das System eine erfindungsgemäße Fernsteuerung gemäß den vorangegangenen Absätzen aufweist, die mittels eines Bedienelements zum Steuern der Funktion oder des Elements der Filmkamera ausgebildet ist.

In einer vorteilhaften Ausgestaltung weist das System eine Schnittstelle zur Kommunikation zwischen Fernsteuerung und Filmkamera auf, wobei die Schnittstelle vorzugsweise an der Filmkamera angebracht ist, wobei die Fernsteuerung zur kabellosen Kommunikation mit der Schnittstelle ausgebildet ist.

Grundsätzlich, sofern nicht anders angegeben oder beansprucht, ist die Fernsteuerung als unabhängig von einer Kamera oder Filmkamera anzusehen. Die Fernsteuerung kann zur Steuerung jeder beliebigen handelsüblichen Filmkamera oder Kamera, beispielsweise einer Fotokamera oder der Kamera eines Smartphones, oder in einem System, aufweisend eine derartige Kamera, verwendet oder bereitgestellt werden.

Einem Fachmann auf dem Gebiet der Technik ist die Funktionsweise der Steuerung einer Filmkamera oder Kamera mittels einer Fernsteuerung bekannt. Grundsätzlich und beispielhaft wird/werden hierbei durch die Bedienung/Stellung eines Bedienelements, beispielsweise des ersten Bedienelements, mittels einer Auswerte- und Steuereinrichtung, beispielsweise einer Datenverarbeitungseinheit der Fernsteuerung, ein oder mehrere Steuersignals erzeugt, welches über eine Ausgabeeinrichtung, beispielsweise über eine Antenne zur kabellosen Datenübertragung oder über eine Infrarot- oder Bluetooth-Schnittstelle der Fernsteuerung, an die Kamera übermittelt wird. Die Kamera wiederum empfängt das/die Steuersignal/e mittels einer Empfangseinrichtung verarbeitet diese mittels einer Auswerte- und Steuereinrichtung, beispielsweise einer Datenverarbeitungseinheit, der Kamera.

Die Erfindung ist nachfolgend anhand eines nicht einschränkenden Ausführungsbeispiels und eines nicht einschränkenden Anwendungsbeispiels unter Bezugnahme auf die Zeichnungen näher beschrieben. In den Zeichnungen zeigen
- Fig. 1: in einer Ansicht von oben, eine aus dem Stand der Technik bekannte Fernsteuerung für Kameras;
- Fig. 2: in einer Ansicht von oben, ein Ausführungsbeispiel einer erfindungsgemäßen Fernsteuerung für Kameras;
- Fig. 3: in einer Seitenansicht von links, die erfindungsgemäße Fernsteuerung aus Fig.2;
- Fig. 4: in einer Ansicht von vorne, die erfindungsgemäße Fernsteuerung aus Fig.2;
- Fig. 5: in einer perspektivischen Ansicht, ein erstes, als Drehknopf ausgebildetes Bedienelement der erfindungsgemäßen Fernsteuerung aus Fig.2;
- Fig. 6: in einer schematischen Darstellung, ein Anwendungsbeispiel der erfindungsgemäßen Fernsteuerung zur Objektivsteuerung einer Filmkamera;

Im Folgenden wird auf die Figuren 2 bis 4 Bezug genommen, die ein beispielhaftes Ausführungsbeispiel einer erfindungsgemäßen Fernsteuerung 1 in mehreren Ansichten darstellen.

Die Fernsteuerung 1 weist eine Handgriffeinheit 2, die von einem Benutzer (nicht dargestellt) entlang einer Griffachse GA in eine erste Hand aufnehmbar ist, und ein, um eine erste Drehachse DA1 drehbares, erstes Bedienelement 3 auf. Das erste Bedienelement 3 kann zusätzlich einen entlang der ersten Drehachse DA1 wirkenden Druckmechanismus, beispielsweise in Form eines integrierten mechanischen Druckelements, aufweisen. Mit dem ersten Bedienelement 3 kann beispielsweise der Zoom eines Objektivs einer Kamera (nicht dargestellt) gesteuert werden.

Die Fernsteuerung 1 ermöglicht das Steuern zumindest eines Elements einer Kamera aus der Ferne. Alternativ können eines oder mehrere andere Elemente, beispielsweise eine Beleuchtungs- oder Blitzeinheit, und/ oder eine oder mehrere Funktionen, beispielsweise das Starten / Stoppen der Aufnahmefunktion, einer Kamera aus der Ferne gesteuert werden.

Die erste Drehachse DA1 steht im Wesentlichen normal auf eine Hauptachse HA der Fernsteuerung 1 und spannt mit der Hauptachse HA eine Hauptebene E auf. "Im Wesentlichen" bedeutet hier, dass der Winkel zwischen der ersten Drehachse DA1 und der Hauptachse HA in einem von einem Fachmann des Gebiets bekannten und erwartbaren Bereich von 90 Winkelgrad abweichen kann, beispielsweise produktionsbedingt.

Beispielsweise kann der Winkel zwischen der ersten Drehachse DA1 und der Hauptachse HA in einem Bereich zwischen 89 und 91 Winkelgrad liegen, wobei auch ein Bereich von 85 bis 95 Winkelgraden möglich ist.

Im dargestellten Ausführungsbeispiel der erfindungsgemäßen Fernsteuerung 1 liegen die Drehachse DA1, die Hauptachse HA und die Griffachse GA in der Hauptebene E, wobei die Griffachse GA in der Hauptebene E aus der Hauptachse HA herausgedreht ist, wie in Figur 2 durch den entsprechenden Pfeil symbolisiert. Folglich ist ein Winkel zwischen der Griffachse GA und der ersten Drehachse DA1 größer als 90 Winkelgrad, wobei dieser Winkel in einem Bereich von in etwa 91 bis 180 Winkelgrad liegen kann, bevorzugt in einem Bereich von in etwa 95 bis 140 Winkelgrad, besonders bevorzugt in einem Bereich von in etwa 100 bis 120 Winkelgrad.

Hält und/ oder bedient ein Benutzer eine erfindungsgemäße Fernsteuerung 1 gemäß den Figuren 2 bis 4 in einer dafür vorgesehenen Art und Weise und in einer vorgesehenen Betriebslage, umschließt der Benutzer die Handgriffeinheit 2 entlang der Griffachse GA mit einer ersten Hand, die gemäß Figur 2 die linke Hand wäre, da die Fernsteuerung 1 in Figur 2 in Betriebslage von oben, also aus der Sicht des Benutzers, wenn er die Fernsteuerung 1 in Betriebslage hält und/ oder bedient, dargestellt ist. Mit einer zweiten Hand, die gemäß Figur 2 die rechte Hand wäre, kann der Benutzer dann das erste Bedienelement 3 halten und/ oder bedienen, insbesondere um die erste Drehachse DA1 in beide Richtungen, im oder gegen den Uhrzeigersinn drehen, wie in Figur 2 durch die entsprechenden Pfeile symbolisiert. Der Daumen des Benutzers der ersten, linken Hand kommt dabei vorzugsweise in einem Bereich 5 auf einer Oberseite der Handgriffeinheit 2 und der Daumen der zweiten, rechten Hand kommt dabei vorzugsweise in einem proximalen Bereich 6 des ersten Bedienelements 3 zu liegen. In der folgenden Beschreibung beziehen sich die Begriffe "proximal" und "distal" entsprechend auf den Körper des Benutzers, wenn er die Fernsteuerung 1 in Betriebslage hält und/ oder bedient.

Durch die im Vergleich zu der in Figur 1 dargestellten Fernsteuerung aus der Hauptachse HA herausgedrehten Griffachse GA der erfindungsgemäßen Fernbedienung 1 gemäß Figur 2 liegt ein zusätzlicher Bereich vor, in den vorteilhaft ein Bedienkörper 4 eingebracht wurde. Der Bedienkörper 4 kann einen distalen ersten Abschnitt 4A und einen proximalen zweiten Abschnitt 4B aufweisen.

In der beispielhaften Ausführung gemäß Figur 2 weisen der erste Abschnitt 4A einen, parallel zur Hauptebene E trapezförmigen Querschnitt und der zweite Abschnitt 4B einen, parallel zur Hauptebene E zumindest teilweise halbkreisförmigen Querschnitt auf, wobei der Querschnitt vom zweiten Abschnitt 4B aus einem halbkreisförmigen proximalen und einem trapezförmigen distalen Teilabschnitt besteht. Hierbei ergeben sich insbesondere die trapezförmigen Abschnitte des Bedienkörpers 4 aus der Form der Handgriffeinheit 2 und des ersten Bedienelements 3. Somit können der durch das Herausrehen der Griffachse GA entstehende zusätzliche Bereich und der Bedienkörper 4 jede beliebige Form aufweisen. Diese Form und die dazugehörigen Querschnitte hängen unter anderem ab von der Form der Handgriffeinheit 2 und des ersten Bedienelements 3, sowie von der Richtung und dem Winkel, mit denen die Griffachse GA aus der Hauptachse HA herausgedreht ist. Beispielsweise kann die Handgriffeinheit 2 entlang der Griffachse GA gebogen sein und/ oder eine konkave und/ oder konvex geschwungene Form aufweisen, und/ oder kann die Griffachse GA schräg nach oben/ unten aus der Hauptebene E und aus der Hauptachse HA herausgedreht sein. Im vorliegenden Ausführungsbeispiel gemäß Figur 2 ist die Handgriffeinheit 2, in Bezug auf die in der Hauptebene E liegende Griffachse GA, in einem proximalen Bereich nach unten gebogen.

Der halbkreisförmige Abschnitt des Bedienkörpers 4 hat unter anderem die Vorteile, dass der gesamte zweite Abschnitt 4B des Bedienkörpers 4 gut erreichbar und folglich schnell und intuitiv bedienbar ist. Außerdem weist er in seinem proximalen Umfangsbereich keine Ecken oder Kanten auf, was die Verletzungsgefahr vermindert.

Der erste Abschnitt 4A des Bedienkörpers 4 kann auf der Oberseite 7 ein zweites Bedienelement 8 aufweisen. Alternativ oder zusätzlich kann der zweite Abschnitt 4B des Bedienkörpers 4 auf der Oberseite 7 ein drittes Bedienelement 9 aufweisen. Das zweite Bedienelement 8 und das dritte Bedienelement 9 können mechanische und/ oder elektronische Druckelemente aufweisen. Die Druckelemente können mechanische Knöpfe oder drucksensitive kapazitive Elemente einer Touch-Oberfläche sein. Alternativ können Schieberegler und/ oder versenkte Drehräder eingebracht sein. Zusätzlich können optische Elemente, insbesondere LEDs und/ oder OLEDs, und/ oder akustische Elemente, insbesondere ein Lautsprecher und/ oder ein Mikrofon, eingebracht sein. Ein Fachmann des Gebiets kennt mögliche weitere Ausgestaltungen und Alternativen.

Alternativ oder zusätzlich kann der zweite Abschnitt 4B des Bedienkörpers 4 ein rundes Display 11 aufweisen. Das Display 11 kann beispielsweise Information, gegebenenfalls in Echtzeit, zu dem Objektiv, der Kamera und/oder dem allgemeinen Systemstatus anzeigen. Das runde Display 11 kann drucksensitive kapazitive Elemente aufweisen. Das runde Display 11 kann ein LED, E-ink oder ein OLED-basiertes Display sein. Ein Fachmann des Gebiets kennt mögliche weitere Ausgestaltungen und Alternativen. Ist ein rundes Display 11 vorgesehen, kann das dritte Bedienelement 9 zumindest abschnittsweise entlang des Umfangs des Displays 11 angeordnet ist. Dies ist besonders platzsparend und bedienungsfreundlich. Der Bedienkörper 4 und/ oder die Handgriffeinheit 2 und oder das erste Bedienelement 3 kann/ können mehrere Displays aufweisen.

Besitzt der Bedienkörper 4, wie in der beispielhaften Ausführung gemäß Figur 2, in dem zweite Abschnitt 4B, einen halbkreisförmigen Abschnitt, so kann entlang der halbkreisförmigen Umfangsfläche dieses Abschnitts ein um eine zweite Drehachse DA2 drehbares, viertes Bedienelement 12 vorgesehen sein. Mit dem vierten Bedienelement 12 kann beispielsweise besonders angenehm in einem Menü der Fernsteuerung 1 und/ oder der Kamera navigiert werden, wobei die Informationen hierzu in dem Display 11 angezeigt werden können. Die zweite Drehachse DA2 steht im Wesentlichen normal auf die Hauptebene E. "Im Wesentlichen" bedeutet hierbei, dass der Winkel zwischen der zweiten Drehachse DA2 und der Hauptebene E in einem von einem Fachmann des Gebiets bekannten und erwartbaren Bereich von 90 Winkelgrad abweichen kann, beispielsweise produktionsbedingt. Beispielsweise kann der Winkel zwischen der zweiten Drehachse DA2 und der Hauptebene E 89 Winkelgrad oder 91 Winkelgrad betragen, wobei auch ein Bereich von 85 bis 95 Winkelgraden möglich ist.

Die Handgriffeinheit 2 kann in einem oberen distalen Bereich ein fünftes Bedienelement 13 aufweisen, insbesondere einen Joystick. Mit dem fünften Bedienelement 13 kann beispielsweise der Zoom eines Objektivs der Kamera noch präziser gesteuert werden oder es können bestimmte, automatisch erkannte Elemente oder Bereiche eines aufgenommenen Bildes gewählt werden. Anzeigemittel 14, insbesondere LED oder OLED-Elemente, können hierbei zu einer Anzeige der aktuellen Einstellung oder Position(en) des fünften Bedienelements 13 vorgesehen sein.

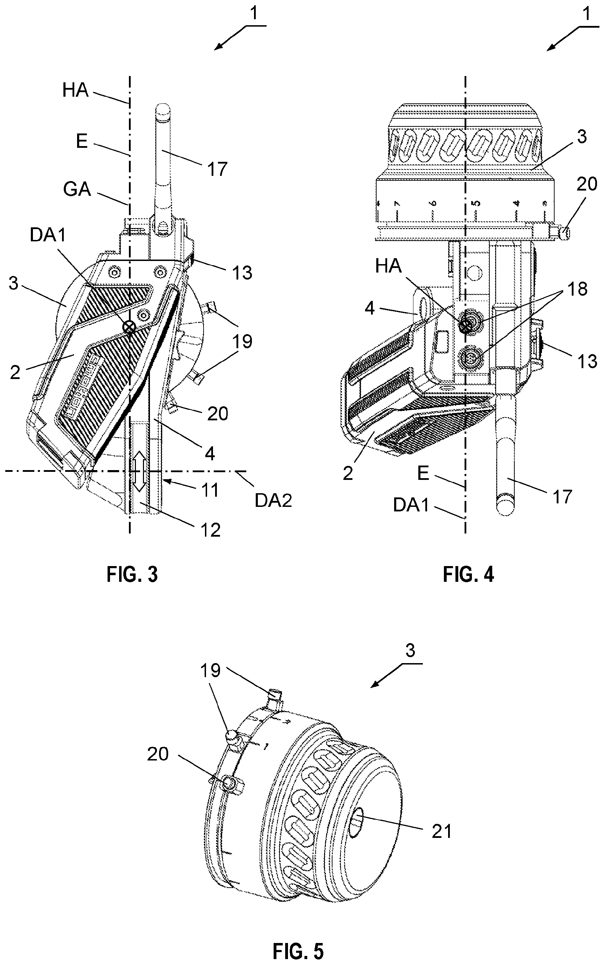

Der Bedienkörper 4 kann, wie in Figur 2 dargestellt, zusätzliche Bedienelemente aufweisen, so zum Beispiel einen Schieberegler 15, der zur Einstellung der Iris des Objektivs der Kamera vorgesehen sein kann, und/ oder ein mechanisches Drucktastenelement 16, das zum Starten / Stoppen der Aufnahme der Kamera vorgesehen sein kann. Außerdem kann die Fernbedienung 1 eine Antenne 17 zur kabellosen Datenkommunikation und/ oder Steckplätze 18 zur Aufnahme von Steckern zur kabelgebundenen Datenkommunikation, wie in Figur 4 dargestellt, aufweisen.

Die Fernsteuerung 1 kann mittels einer Einwegbatterie und/ oder mittels einer wiederaufladbaren Batterie, insbesondere eines Akkumulators, die sich beispielsweise in der Handgriffeinheit 2 oder dem Bedienkörper 4 befindet, mit Energie versorgt werden. Vorteilhaft weist die Fernsteuerung 1 zur Energieversorgung zusätzlich einen herausnehmbaren und/ oder fest verbauten Kondensator auf, der dazu ausgebildet ist für eine bestimmte Zeitdauer auch alleine, also ohne die Batterie, eine ausreichende Energieversorgung der Fernsteuerung 1 zu gewährleisten. So kann beispielsweise ein notwendiger Austausch einer leeren Batterie während des Betriebs vollzogen werden, ohne, dass die Fernsteuerung 1 abgeschaltet werden muss und/ oder die Energieversorgung ungewollt unterbrochen wird. Die Zeitdauer, während der der Kondensator die Fernsteuerung 1 alleine mit Energie versorgt, kann beispielsweise zwischen zehn (10) Sekunden und einer (1) Minute liegen, vorzugsweise in etwa 20 Sekunden. Ein fest verbauter Kondensator kann beispielsweise ein sogenannter Doppelschicht-Kondensator, auch "Gold Cap" genannt, sein.

Hält und/ oder bedient ein Benutzer die erfindungsgemäße Fernsteuerung 1 gemäß den Figuren 2 bis 4 in Betriebslage, so kann er, vorzugsweise mit dem Daumen der ersten, linken Hand das zweite Bedienelement 8, das fünfte Bedienelement 13 und/ oder den Schieberegler 15 bedienen, und kann er, vorzugsweise mit dem Daumen der zweiten, rechten Hand, das dritte Bedienelement 9, gegebenenfalls das Display 11, das vierte Bedienelement 12 und/ oder das Drucktastenelement 16 bedienen. Somit ermöglicht die erfindungsgemäße Fernsteuerung 1 dem Benutzer ein vielseitiges schnelles und intuitives Steuern einer Kamera, wobei die Fernsteuerung 1 kompakt, handlich und ergonomisch zu halten und/ oder zu bedienen ist.

Der Benutzer kann alternativ jedes Bedienelement 3, 8, 9, 12, 13, 15, 16 und/ oder das Display 11 mit jedem Finger und/ oder Daumen jeder Hand oder mit einem Gegenstand, beispielsweise einem Eingabestift, bedienen.

Figur 5 zeigt das erste Bedienelement 3 gemäß den Figuren 2 bis 4 in einer isolierten perspektivischen Ansicht. Das erste Bedienelement 3 ist als Drehknopf mit einer aktivierbaren und de-aktivierbaren Drehwinkelbegrenzung ausgebildet. Die Drehwinkelbegrenzung besteht aus zwei Endanschlägen 19 und einem, sich mit dem Drehknopf mitbewegenden Anschlag 20. Die Endanschläge 19 können mittels Schrauben oder Federstiften entlang des Umfangs des Drehknopfs an einer bestimmten Stelle fixiert werden. Der Anschlag 20 kann zur Feststellung des Drehknopfs ebenfalls mittels einer Schraube oder einem Federstift fixiert werden. Mittels eines Aktiviermittels 21, das wie in Figur 5 als Schraube ausgeführt sein kann, kann die Drehwinkelbegrenzung aktiviert oder deaktiviert werden, beispielsweise indem die Drehwinkelbegrenzung durch Drehen der Schraube vom Drehknopf entkoppelt oder an den Drehknopf angekoppelt wird. So kann in einem ersten Bedienmodus, in dem die Drehwinkelbegrenzung aktiviert ist, der Drehknopf in beide Umdrehungsrichtungen nur bis zu den Endanschlägen 20, also um einen Winkel kleiner als 360 Winkelgrad. In einem zweiten Bedienmodus, in dem die Drehwinkelbegrenzung deaktiviert ist, kann der Drehknopf in beide Umdrehungsrichtungen beliebig lange bewegt werden, also um einen Winkel, der auch größer als 360 Winkelgrad sein kann.

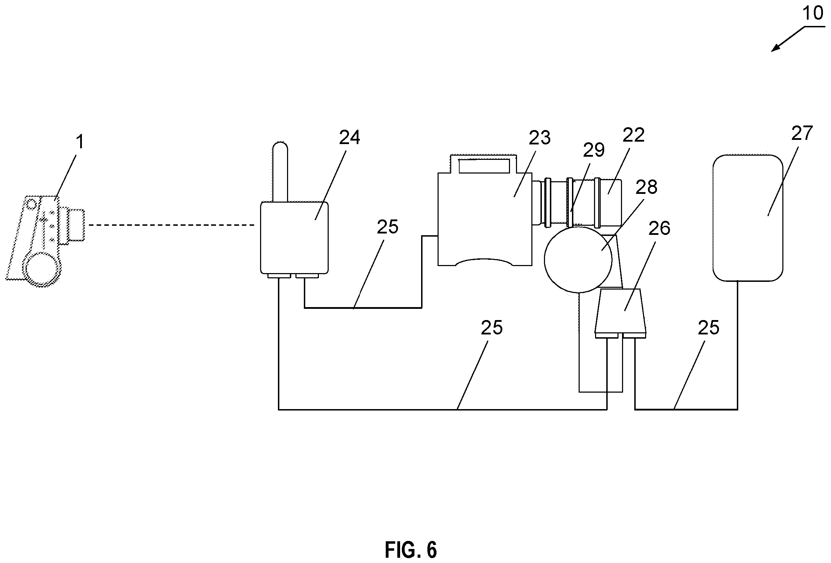

Figur 6 zeigt ein mögliches Anwendungsbeispiel der erfindungsgemäßen Fernsteuerung 1 als Teil eines Systems 10 zur Objektivsteuerung eines Objektivs 22 einer Filmkamera 23. Die Fernsteuerung 1 kommuniziert dabei kabellos, oder alternativ kabelgebunden, mit einer Schnittstelle 24. Die Schnittstelle 24 wiederum kann über Kabel 25, oder alternativ kabellos, mit der Filmkamera 23 und/ oder mit zumindest einem Motor 26 verbunden sein. Jeder Motor 26 kann elektrisch angetrieben werden, beispielsweise mittels der Energie aus einer Batterie 27, um über ein Zahnrad 28 des Motors 26 ein Zahnrad 29 des Objektivs 22 anzutreiben ("Daisy-Chain" Verbindung). Alternativ kann der Motor 26 auch die Schnittstelle 24 direkt aufweisen. Ein Benutzer kann so beispielsweise mittels der Fernsteuerung 1 den Fokus, die Iris und/ oder den Zoom des Objektivs 22 und/ oder das Starten / Stoppen der Aufnahme der Filmkamera 23 steuern. Die Schnittstelle 24, der Motor 26 und/ oder die Batterie 27 können direkt an der Filmkamera 23 angebracht werden.

Die erfindungsgemäßen Fernsteuerung 1 ermöglicht also unabhängig oder als Teil eines Systems die Steuerung zumindest einer Funktion oder eines Elements, beispielsweise des Objektivs 22 und/ oder einer Beleuchtungs- oder Blitzeinheit, einer Kamera, beispielsweise der Filmkamera 23. Das beispielhafte System 10 gemäß Figur 6 kann weiters eine oder mehrere Schnittstelle/n 24 zur Kommunikation zwischen der Fernsteuerung 1 und der Filmkamera 23 und/ oder zwischen der Fernsteuerung 1 und einer oder mehrerer anderer Kameras und/ oder zwischen der Fernsteuerung 1 und Elementen, beispielsweise des Objektivs 22 und/ oder einer Beleuchtungs- oder Blitzeinheit, der Filmkamera 23 und/ oder anderer Kameras aufweisen. Die Fernsteuerung 1 kommuniziert dabei, beispielsweise über die Antenne 17, kabellos, oder alternativ kabel gebunden, mit der/den Schnittstelle/n 24. Die Schnittstelle/n 24 wiederum kann/ können über Kabel 25, oder alternativ kabellos, mit der Filmkamera 23/ Kamera und/ oder mit zumindest einem Motor 26 verbunden sein. Vorzugsweise ist die Schnittstelle 24 direkt an der Filmkamera 23, einer Kamera und/ oder an dem Motor 26 angebracht. Ein Benutzer kann so beispielsweise mittels des ersten Bedienelements 3 und/ oder eines anderen Bedienelements 8, 9 oder 12 der Fernsteuerung 1 eine oder mehrere Funktion/en und/ oder Element/e steuern.

Eine erfindungsgemäße Fernsteuerung 1 kann alternativ zur Steuerung für jede beliebige Kamera, beispielsweise eine Fotokamera oder die Kamera eines Smartphones, oder in einem System, aufweisend eine derartige Kamera, bereitgestellt werden. Eine erfindungsgemäße Fernsteuerung kann zur Steuerung für eine Kamera, die an einem land- luft- oder wassergebundenen, gegebenenfalls unbemannten und autonomen, Fahrzeug, beispielsweise eine ferngesteuerte flugfähige Drohne oder ein ferngesteuertes U-Boot, angebracht ist, oder in einem System, aufweisend eine derartige Kamera und ein derartiges Fahrzeug, bereitgestellt werden.

## Patentansprüche

1. Fernsteuerung (1) für Kameras, aufweisend eine von einem Benutzer entlang einer Griffachse (GA) in eine erste Hand aufnehmbare Handgriffeinheit (2) und ein, mit einer zweiten Hand des Benutzers bedienbares und um eine erste Drehachse (DA1) drehbares erstes Bedienelement (3), wobei die erste Drehachse (DA1) im Wesentlichen normal auf eine Hauptachse der Fernsteuerung (1) steht und mit der Hauptachse (HA) eine Hauptebene (E) aufspannt, **dadurch gekennzeichnet, dass**
die Griffachse (GA) in der Hauptebene (E) aus der Hauptachse (HA) herausgedreht ist, wodurch ein Winkel zwischen Griffachse (GA) und der ersten Drehachse (DA1) größer als 90 Winkelgrad ist, wobei die Fernsteuerung (1) in dem, durch das Herausdrehen der Griffachse (GA) vorliegenden Bereich einen Bedienkörper (4) mit zusätzlichen Anzeigemitteln und/ oder Bedienelementen aufweist, wobei die Handgriffeinheit (2) und das erste Bedienelement (3) derart zueinander angeordnet sind, dass, während der Benutzer die Fernsteuerung (1) in der dafür vorgesehenen Betriebslage hält und/ oder bedient, der Daumen der ersten Hand auf einer Oberseite der Handgriffeinheit (2) zu liegen kommt.

2. Fernsteuerung (1) gemäß Anspruch 1, **dadurch gekennzeichnet, dass** der Bedienkörper (4) einen ersten Abschnitt (4A) und einen zweiten Abschnitt (4B) aufweist, wobei sich in Betriebslage der Fernsteuerung (1) der erste Abschnitt (4A) distal und der zweite Abschnitt (4B) proximal zum Benutzer befinden.

3. Fernsteuerung (1) gemäß Anspruch 2, **dadurch gekennzeichnet, dass** der erste Abschnitt (4A) des Bedienkörpers (4) einen, parallel zur Hauptebene (E) trapezförmigen Querschnitt und der zweite Abschnitt (4B) des Bedienkörpers (4) einen, parallel zur Hauptebene (E) zumindest teilweise halbkreisförmigen Querschnitt aufweisen.

4. Fernsteuerung (1) gemäß Anspruch 2 oder 3, **dadurch gekennzeichnet, dass** der erste Abschnitt (4A) des Bedienkörpers (4) auf einer Oberseite (7) ein zweites Bedienelement (8) aufweist, vorzugsweise mit mechanischen und/ oder elektronischen Druckelementen für einen Daumen der ersten Hand des Benutzers.

5. Fernsteuerung (1) gemäß einem der Ansprüche 2 bis 4, **dadurch gekennzeichnet, dass** der zweite Abschnitt (4B) des Bedienkörpers (4) auf der Oberseite (7) ein drittes Bedienelement (9) aufweist, vorzugsweise mit mechanischen und/ oder elektronischen Druckelementen für einen Daumen der zweiten Hand des Benutzers.

6. Fernsteuerung (1) gemäß einem der Ansprüche 2 bis 5, **dadurch gekennzeichnet, dass** der zweite Abschnitt (4B) des Bedienkörpers (4) ein rundes Display (11) aufweist.

7. Fernsteuerung (1) gemäß Anspruch 6, **dadurch gekennzeichnet, dass** das dritte Bedienelement (9) zumindest abschnittsweise entlang des Umfangs des Displays (11) angeordnet ist.

8. Fernsteuerung (1) gemäß einem der Ansprüche 3 bis 7, **dadurch gekennzeichnet, dass** der zweite Abschnitt (4B) des Bedienkörpers (4) entlang seiner halbkreisförmigen Umfangsfläche ein um eine zweite Drehachse (DA2) drehbares viertes Bedienelement (12) aufweist, vorzugsweise für die Bedienung durch den Daumen der zweiten Hand des Benutzers, wobei die zweite Drehachse (DA2) im Wesentlichen normal auf die Hauptebene (E) steht.

9. Fernsteuerung (1) gemäß einem der Ansprüche 1 bis 8, **dadurch gekennzeichnet, dass** die Handgriffeinheit (2) in einem oberen distalen Bereich ein fünftes Bedienelement (13) aufweist, insbesondere einen Joystick für die Bedienung durch den Daumen der ersten Hand des Benutzers.

10. Fernsteuerung (1) gemäß einem der Ansprüche 1 bis 9, **dadurch gekennzeichnet, dass** das erste Bedienelement (3) als Drehknopf mit einer aktivierbaren und de-aktivierbaren Drehwinkelbegrenzung ausgebildet ist.

11. Fernsteuerung (1) gemäß einem der Ansprüche 1 bis 10, **dadurch gekennzeichnet, dass** die Fernsteuerung (1) zur Energieversorgung eine Batterie und einen Kondensator aufweist, wobei der Kondensator dazu ausgebildet ist für eine bestimmte Zeitdauer, insbesondere während des Austauschs der Batterie, eine ausreichende Energieversorgung der Fernsteuerung (1) zu gewährleisten.

12. System (10) zur Fernsteuerung einer Funktion oder eines Elements, insbesondere eines Objektivs (22), einer Filmkamera (23) des Systems (10), **dadurch gekennzeichnet, dass** das System (10) eine Fernsteuerung (1) gemäß einem der Ansprüche 1 bis 11 aufweist, die mittels eines Bedienelements (3, 8, 9, 12) zum Steuern der Funktion oder des Elements der Filmkamera (23) ausgebildet ist.

13. System (10) gemäß Anspruch 12, **dadurch gekennzeichnet, dass** das System (10) eine Schnittstelle (24) zur Kommunikation zwischen Fernsteuerung (1) und Filmkamera (23) aufweist, wobei die Schnittstelle (24) vorzugsweise an der Filmkamera (23) angebracht ist, wobei die Fernsteuerung (1) zur kabellosen Kommunikation mit der Schnittstelle (24) ausgebildet ist.

## Claims

1. A remote control (1) for cameras, having a grab handle unit (2) that may be received in a first hand by a user along a handle axis (GA) and a first operating element (3) operable using a second hand of the user and rotatable about a first axis of rotation (DA1), wherein the first axis of rotation (DA1) is substantially perpendicular to a principal axis of the remote control (1) and spans a principal plane (E) with the principal axis (HA), **characterized in that** the handle axis (GA) is rotated out of the principal axis (HA) within the principal plane (E), whereby an angle between handle axis (GA) and the first axis of rotation (DA1) is higher than 90 angular degrees, wherein the remote control (1) has an operating body (4) with additional display means and/or operational elements within the area that is present due to the rotation of the handle axis (GA) thereout, wherein the grab handle unit (2) and the first operational element (3) are arranged in relation to each other such that while the user holds and/or operates the remote control (1) in the operational position intended therefore, the thumb of the first hand rests on a top surface of the grab handle unit (2).

2. A remote control (1) according to claim 1, **characterized in that** der operating body (4) has a first portion (4A) and a second portion (4B), wherein in the operational position of the remote control (1) the first portion (4A) is located distal and the second portion (4B) is located proximal to the user.

3. A remote control (1) according to claim 2, **characterized in that** the first portion (4A) of the operating body (4) has a trapezoid cross-section in parallel to the principal plane (E) and the second portion (4B) of the operating body (4) has an at least partly semi-circular cross-section in parallel to the principal axis (E).

4. A remote control (1) according to claim 2 or 3, **characterized in that** the first portion (4A) of the operating body (4) has on a top surface (7) a second operating element (8), preferably with mechanic and/or electronic pressure elements for a thumb of the first hand of the user.

5. A remote control (1) according to any of claims 2 to 4, **characterized in that** the second portion (4B) of the operating body (4) on the top surface (7) has a third operational element (9), preferable with mechanic and/or electronic pressure elements for a thumb of the second hand of the user.

6. A remote control (1) according to any of claims 2 to 5, **characterized in that** the second portion (4B) of the operating body (4) has a round display (11).

7. A remote control (1) according to claim 6, **characterized in that** the third operating element (9) is arranged at least in some portions along the periphery of the display (11).

8. A remote control (1) according to any of claims 3 to 7, **characterized in that** der second portion (4B) of the operating body (4), along its semi-circular peripheral surface, has a fourth operating element (12) rotatable about a second axis of rotation (DA2), preferably for operating using the thumb of the second hand of the user, wherein the second axis of rotation (DA2) is substantially perpendicular to the principal plane (E).

9. A remote control (1) according to any of claims 1 to 8, **characterized in that** the grab handle unit (2) in an upper distal area has a fifth operating element (13), in particular a joystick for operating using the thumb of the first hand of the user.

10. A remote control (1) according to any of claims 1 to 9, **characterized in that** the first operating element (3) is configured as a rotary knob having an activatable and deactivatable rotation angle restriction.

11. A remote control (1) according to any of claims 1 to 10, **characterized in that** the remote control (1) has a battery and a capacitor for the energy supply, wherein the capacitor is configured to ensure for a determined period of time, in particular during the replacement of the battery, a sufficient energy supply of the remote control (1).

12. A system (10) for the remote control of a function or an element, in particular an objective (22), of a film camera (23) of the system (10), **characterized in that** the system (10) has a remote control (1) according to any of claims 1 to 11, which is configured by means of an operating element (3, 8, 9, 12) to control the function or the element of the film camera (23).

13. A system (10) according to claim 12, **characterized in that** the system (10) has an interface (24) for the communication between remote control (1) and film camera (23), wherein the interface (24) is preferably attached at the film camera (23), wherein the remote control (1) is configured for the wireless communication with the interface (24).

## Revendications

1. Télécommande (1) pour caméras, présentant une unité de poignée (2) saisissable dans une première main par un utilisateur le long d'un axe de préhension (GA) et un premier élément de commande (3) utilisable avec une deuxième main de l'utilisateur et pouvant pivoter autour d'un premier axe de rotation (DA1), le premier axe de rotation (DA1) étant sensiblement perpendiculaire à un axe principal de la télécommande (1) et couvrant avec l'axe principal (HA) un plan principal (E), **caractérisée en ce que** l'axe de préhension (GA) est séparé par rotation de l'axe principal (HA) dans le plan principal (E), créant ainsi entre l'axe de préhension (GA) et le premier axe de rotation (DA1) un angle supérieur à 90 degrés, la télécommande (1) présentant, dans la zone mise en avant par la séparation par rotation de l'axe de préhension (GA), un corps de commande (4) avec des moyens d'affichage et/ou des éléments de commande supplémentaires, l'unité de poignée (2) et le premier élément de commande (3) étant disposés l'un par rapport à l'autre de sorte que, lorsque l'utilisateur tient et/ou utilise la télécommande (1) dans la position de fonctionnement prévue à cet effet, le pouce de la première main vient se poser sur une face supérieure de l'unité de poignée (2).

2. Télécommande (1) selon la revendication 1, **caractérisée en ce que** le corps de commande (4) présente un premier segment (4A) et un deuxième segment (4B), le premier segment (4A) se trouvant en position distale et le deuxième segment (4B) en position proximale par rapport à l'utilisateur dans la position d'utilisation de la télécommande (1).

3. Télécommande (1) selon la revendication 2, **caractérisée en ce que** le premier segment (4A) du corps de commande (4) présente une section trapézoïdale parallèlement au plan principal (E) et le deuxième segment (4B) une section au moins partiellement semi-circulaire parallèlement au plan principal (E).

4. Télécommande (1) selon la revendication 2 ou 3, **caractérisée en ce que** le premier segment (4A) du corps de commande (4) présente sur une face supérieure (7) un deuxième élément de commande (8), de préférence avec des éléments de pression mécaniques et/ou électroniques pour un pouce de la première main de l'utilisateur.

5. Télécommande (1) selon une des revendications 2 à 4, **caractérisée en ce que** le deuxième segment (4B) du corps de commande (4) présente sur la face supérieure (7) un troisième élément de commande (9), de préférence avec des éléments de pression mécaniques et/ou électroniques pour un pouce de la deuxième main de l'utilisateur.

6. Télécommande (1) selon une des revendications 2 à 5, **caractérisée en ce que** le deuxième segment (4B) du corps de commande (4) présente sur un écran rond (11).

7. Télécommande (1) selon la revendication 6, **caractérisée en ce que** le troisième élément de commande (9) est disposé au moins en partie le long de la périphérie de l'écran (11).

8. Télécommande (1) selon une des revendications 3 à 7, **caractérisée en ce que** le deuxième segment (4B) du corps de commande (4) présente le long de sa surface périphérique semi-circulaire un quatrième élément de commande (12) pouvant pivoter autour d'un deuxième axe de rotation (DA2), de préférence destiné à être commandé par le pouce de la deuxième main de l'utilisateur, le deuxième axe de rotation (DA2) étant sensiblement perpendiculaire au plan principal (E).

9. Télécommande (1) selon une des revendications 1 à 8, **caractérisée en ce que** l'unité de poignée (2) présente dans une zone supérieure distale un cinquième élément de commande (13), en particulier une manette destinée à être commandée par le pouce de la première main de l'utilisateur.

10. Télécommande (1) selon une des revendications 1 à 9, **caractérisée en ce que** le premier élément de commande (3) est configuré comme un bouton rotatif avec une limitation d'angle de rotation activable et désactivable.

11. Télécommande (1) selon une des revendications 1 à 10, **caractérisée en ce que** la télécommande (1) possède pour l'alimentation en énergie une batterie et un condensateur, le condensateur étant conçu pour garantir pendant un laps de temps déterminé, en particulier pendant le remplacement de la batterie, une alimentation en énergie suffisante de la télécommande (1).

12. Système (10) de télécommande d'une fonction ou d'un élément, en particulier d'un objectif (22), d'une caméra (23) du système (10), **caractérisé en ce que** le système (10) présente une télécommande (1) selon une des revendications 1 à 11 qui est conçue pour commander la fonction ou l'élément de la caméra (23) au moyen d'un élément de commande (3, 8, 9, 12).

13. Système (10) selon la revendication 12, **caractérisé en ce que** le système (10) possède une interface (24) pour la communication entre la télécommande (1) et la caméra (23), l'interface (24) étant montée de préférence sur la caméra (23), la télécommande (1) étant conçue pour la communication sans fil avec l'interface (24).
